# FASCICULE DE BREVET EUROPEEN

(11) **EP 2 138 031 B1**
(45) Date de publication et mention de la délivrance du brevet: **07.05.2014**
(21) Numéro de dépôt: 09163600.1
(22) Date de dépôt: 24.06.2009
(51) Int. Cl.: A01G 3/04

(54) **Tailleuse de haies**
Heckenschneider
Hedge trimmer

(30) Priorité: 26.06.2008 FR 0854276
(43) Date de publication de la demande: 30.12.2009
(73) Titulaire: Kuhn-Audureau S.A., 85260 La Copechagnière (FR)
(72) Inventeur: Peterschmitt,, Mickaël, 85300, Le Perrier (FR); Gautron, Pascal, 85250, Saint-Fulgent (FR)
(74) Mandataire: Esch, Esther Evelyne

(56) Documents cités:
- EP-A- 1 776 855
- DE-A1-102006 034 153
- DE-U1- 20 014 224
- GB-A- 634 971
- J.-D. BOYÉ, S. ARNOULD, J.-P. ROUSSENNAC: "La taille des haies: un objectif, la qualité" MATÉRIEL & PAYSAGE, [Online] no. 4, janvier 2003 (2003-01), - février 2003 (2003-02) XP007913441

## Description

L'invention concerne une tailleuse de haies avec un carter portant des outils de coupe rotatifs et renfermant des engrenages pour entraîner desdits outils de coupe en rotation.

Dans le domaine des faucheuses débroussailleuses employées pour l'entretien du paysage, les tracteurs sont généralement équipés d'un bras articulé positionné à l'arrière du véhicule sur lequel est fixé un outil de travail. L'outil de travail en question peut être un rotor, un sécateur ou encore une tailleuse de haies.

Les tailleuses de haies sont des outils comportant de trois à cinq scies circulaires, ou des plateaux munis de couteaux, qui tournent à des vitesses de l'ordre de 2000 tours par minute, ces outils utilisés pour tailler les végétaux fonctionnent la plupart du temps en position verticale.

Les tailleuses de haies sont aujourd'hui entraînées en rotation par des moteurs hydrauliques, la transmission entre l'arbre moteur et les outils de coupe est le plus souvent réalisée par des courroies.

Ce type de transmission pose plusieurs problèmes notamment en ce qui concerne l'entretien, plus particulièrement en relation avec la tension des courroies et le graissage des paliers, lequel graissage nécessite le démontage des outils de coupe, ce qui constitue une opération longue et fastidieuse, nécessitant un temps d'immobilisation relativement important. Par ailleurs ce matériel est coûteux à construire et insuffisamment performant pour ce qui concerne la régularité de taille des haies.

Le document DE 200 14 224 U1 décrit une tailleuse de haies comportant un carter portant plusieurs lames de scies circulaires situées dans un premier plan proche du carter et plusieurs lames de scies circulaires situées dans un deuxième plan plus éloigné dudit carter. Ces lames sont entraînées en rotation au moyen de roues dentées et de pignons logés dans le carter. Ces roues dentées et pignons nécessitent une bonne lubrification pour fonctionner correctement. Cette lubrification peut se faire naturellement lorsque le carter est en position horizontale et que tous lesdits pignons et roues dentées baignent partiellement dans le lubrifiant. Par contre, cela n'est plus le cas lorsque le carter est en position verticale durant le travail. La rotation des pignons et des roues dentées qui se situent dans le haut du carter peut alors provoquer un échauffement pouvant entraîner un mauvais fonctionnement et des détériorations.

L'invention a donc pour objectif de résoudre les principales difficultés évoquées en proposant un type de transmission performant pour une tailleuse de haies et avec un système de lubrification adapté à son utilisation.

La présente invention concerne une tailleuse de haies comportant un carter portant des outils de coupe animés en rotation au moyen d'un moteur d'entraînement transmettant son mouvement par l'intermédiaire d'une transmission à engrenages placés dans ledit carter, la tailleuse de haies étant caractérisée en ce que la transmission comporte un système interne de lubrification qui est actionné par les engrenages placés dans le carter et déplaçant du lubrifiant à l'intérieur entre le bas et le haut du carter lorsque celui-ci est placé en position verticale durant le travail, tel qu'énoncé dans la revendication 1.

Les avantages de la tailleuse de haies selon l'invention sont multiples :
- la puissance de coupe est fortement améliorée par rapport aux outils classiques comportant des transmissions à courroies,
- en raison d'une transmission avec des engrenages la synchronisation des outils de coupe entre eux est excellente. Cette synchronisation permet de positionner les couteaux des outils de coupe dans un même plan en vue d'une grande efficacité et d'une grande précision de coupe,
- la maintenance de l'ensemble est réduite,
- la fabrication de la tailleuse de haies est réalisable pour un coût inférieur à ceux des outils existants, notamment en raison de l'emploi de pièces communes avec d'autres machines déjà fabriquées pour un coût de revient assez bas,
- la possibilité de réaliser la rotation des outils de coupe dans les deux sens possibles est également un avantage non négligeable.

D'autres caractéristiques et avantages de l'invention se dégageront de la description qui va suivre en regard des dessins annexés qui ne sont donnés qu'à titre d'exemples non limitatifs. Dans ces dessins :
La figure 1 représente une vue générale de la machine attelée à un tracteur,
La figure 2 illustre une vue d'ensemble du carter de la machine,
La figure 3 montre une vue de détail du carter ouvert,
La figure 4 représente une coupe suivant le plan A-A' de la figure 3, des moyens assurant la circulation du lubrifiant.

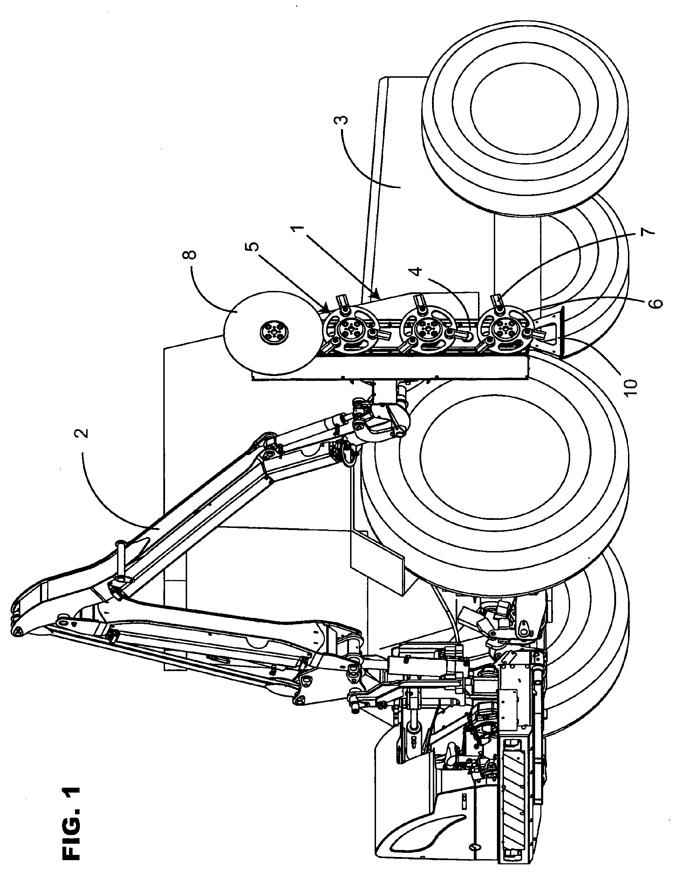

Comme le montre la figure 1 une tailleuse de haies 1 selon l'invention est destinée à être placée à l'extrémité d'un bras articulé 2 supporté par une plateforme placée à l'arrière d'un tracteur 3.

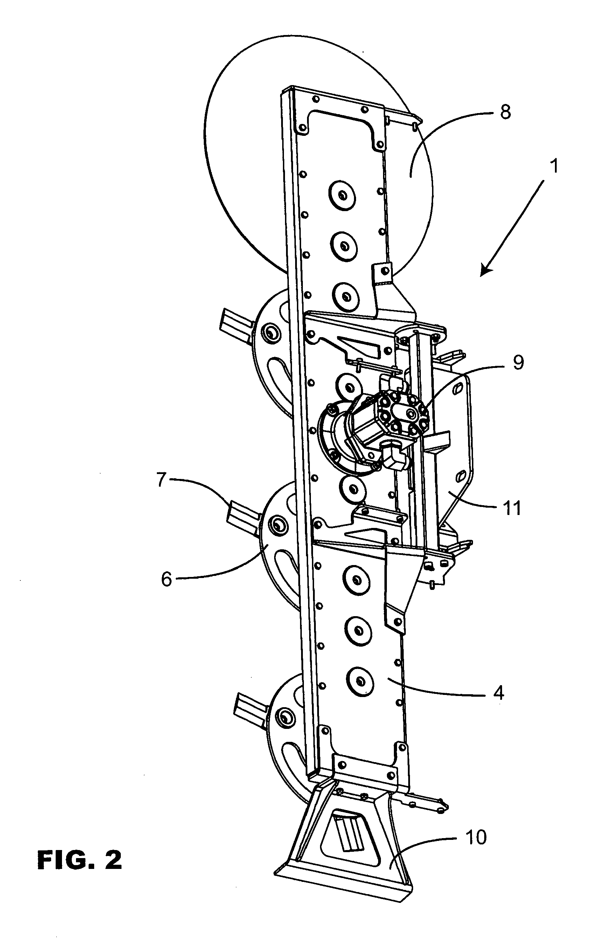

Tel que cela est représenté sur la figure 1, la tailleuse de haies comporte un carter 4 portant des organes de coupe 5 actionnés en rotation au moyen d'un moteur hydraulique visible sur la figure 2 et référencé 9.

La tailleuse de haies fonctionne essentiellement en position verticale mais peut également travailler de manière horizontale et en position inclinée par l'intermédiaire du bras articulé qui permet de déplacer l'outil et le faire agir dans les trois dimensions.

Tel que cela est visible sur la figure 1, les organes de coupe 5 peuvent être constitués de plateaux 6 munis de couteaux 7 disposés près du bord extérieur desdits plateaux, lesquels couteaux 7 peuvent être montés fixes ou mobiles autour de leur axe de fixation avec le plateau 6 correspondant selon des configurations connues. Les organes de coupe 5 peuvent également être constitués par des scies circulaires 8.

Les organes de coupe 5 sont animés en rotation au moyen du moteur d'entraînement 9 qui transmet son mouvement par l'intermédiaire d'une transmission. Ladite transmission est placée dans le carter 4 étanche contenant un lubrifiant.

La figure 2 présente une vue en position verticale de la tailleuse de haies 1 par l'arrière, c'est-à-dire du côté de l'attache avec le bras articulé 2 relié au tracteur, la tailleuse étant détachée dudit bras articulé. Cette vue montre le carter 4, le moteur 9 d'entraînement des organes de coupe 5 sous forme de plateaux 6 supportant les couteaux 7 ou de scies circulaires 8, et un dispositif de sécurité sous forme d'une butée de protection 10 placée à l'extrémité du carter 4.

Selon l'invention la tailleuse de haies comporte au moins une butée de protection 10 placée en partie basse du carter 4, sous l'organe de coupe 5 inférieur, lorsque le carter 4 est placé en position de travail à la verticale, tel que cela est représenté sur la figure 2.

La figure 2 montre également l'élément d'attache 11 permettant de fixer la tailleuse de haies avec l'extrémité du bras articulé 2 relié au tracteur 3.

Selon l'invention la tailleuse de haies est **caractérisée en ce que** la transmission se compose d'un train d'engrenages 12 placé dans le carter 4 et d'un système de lubrification 13 interne au carter 4 qui permet de faire circuler un lubrifiant à l'intérieur du carter 4.

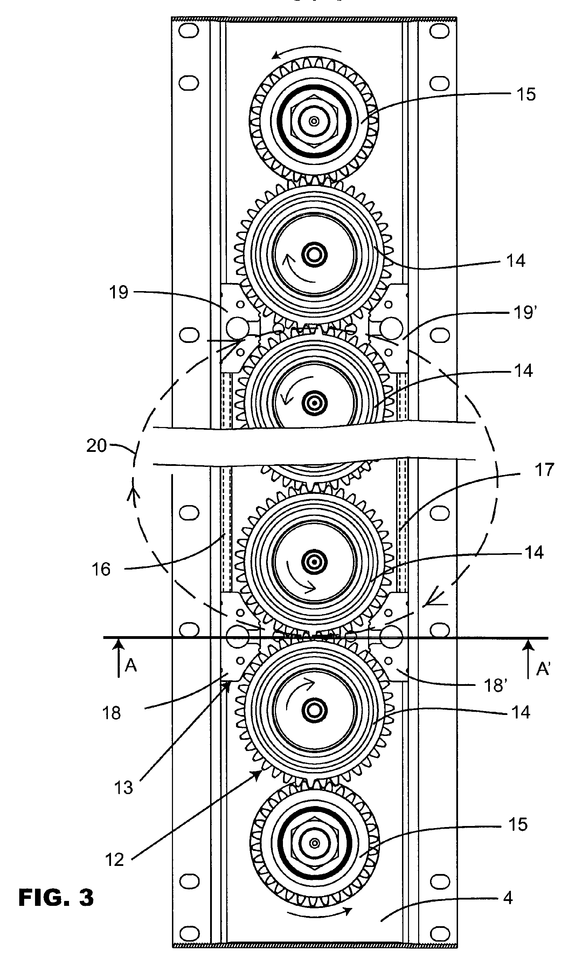

Plus précisément, et tel que cela est illustré sur la figure 3, le train d'engrenages 12 est constitué par des roues dentées intermédiaires 14, des entraînements dentés 15 porteurs des organes de coupe 5 et par l'arbre denté du moteur 9 non représenté sur la figure 3.

Selon l'invention, et tel que cela peut être compris au regard de la figure 2, l'arbre moteur de l'entraînement est avantageusement placé au centre du train d'engrenages 12 et un nombre égal de roues se répartissent de part et d'autre de cet arbre pour constituer ledit train d'engrenages 12.

La figure 3 présente une vue partielle du carter 4 ouvert montrant uniquement les deux extrémités du train d'engrenages 12 avec un sens de rotation possible des roues et entraînements dentés 14 et 15.

Selon l'invention, les organes de coupe 5 sont portés par des entraînements dentés 15 dont certains sont intégrés dans le train d'engrenages 12 et d'autres placés aux extrémités de celui-ci, la figure 3 représente uniquement ceux placés aux extrémités. Ces entraînements dentés 15 sont constitués par des arbres avec une extrémité qui s'étend dans le carter 4 et qui comporte une partie en forme de roue dentée.

De manière préférée selon l'invention il est placé un nombre suffisant de roues dentées intermédiaires 14 pour que les axes des entraînements dentés 15 soient assez éloignés les uns des autres, de telle manière que le nombre d'organes de coupe 5, par exemple les plateaux 6 porteurs de couteaux 7 sur les figures 1 et 2, soit compris entre deux et six voire davantage si la largeur de travail doit être plus important.

Avantageusement selon l'invention, pour des raisons d'encombrement et des raisons mécaniques, il a été jugé optimal de placer quatre organes de coupe 5 sur la longueur du carter 4, comme cela peut être visualisé sur les figures 1 et 2.

Selon l'invention la tailleuse de haies comporte de manière favorable trois roues dentées intermédiaires 14 placées entre chaque entraînement denté 15 porteur d'un organe de coupe 5, de manière à ce que tous les organes de coupe 5 tournent dans le même sens.

En raison de l'emploi d'un train d'engrenages 12 pour la transmission, il est possible de faire travailler les organes de coupe 5 dans le même plan, notamment les plateaux 6 munis de couteaux 7 dont les trajectoires peuvent se recouvrir partiellement afin d'obtenir une coupe régulière des haies, ce qui est impossible avec une transmission avec des courroies selon l'art antérieur.

Ainsi selon une caractéristique importante de l'invention les organes de coupe 5 sont synchronisés en rotation dans un même plan.

En raison du fonctionnement fréquent en position verticale de la tailleuse de haies le lubrifiant incorporé au carter 4 pour assurer la longévité des engrenages 12 a tendance à descendre par gravité dans le bas du carter 4. Il apparaît de fait nécessaire, à la fois pour éviter l'échauffement du lubrifiant et à la fois pour que tous les engrenages 12 soient lubrifiés, de prévoir un système 13 permettant de faire circuler le lubrifiant.

Selon l'invention le système 13 de lubrification est actionné par les engrenages 12 eux-mêmes. Ledit système interne 13 de lubrification implique quatre roues dentées intermédiaires 14 et au moins un tuyau 16 pour le déplacement du lubrifiant entre le bas et le haut du carter 4 lorsque celui-ci est placé en position verticale.

De préférence il est aussi utilisé un tuyau 17 placé à l'opposé du tuyau 16 dans le carter 4 pour faire redescendre le lubrifiant, ou pour le monter lorsque la tailleuse de haies fonctionne en position verticale inversée à 180° par rapport à la position illustrée sur la figure 3.

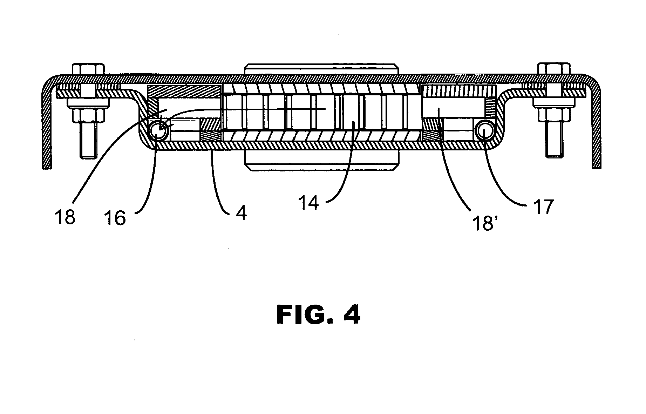

La figure 4 montre une vue selon la coupe A - A' de la figure 3 pour expliciter le mécanisme de circulation du lubrifiant.

Sur cette figure 4 une roue dentée intermédiaire 14 pousse le lubrifiant par refoulement vers une flasque formant un collecteur 18 commun avec la roue dentée intermédiaire 14 voisine. Le collecteur 18 est relié au tuyau 16 de montée du lubrifiant vers le haut du carter 4. La roue dentée intermédiaire 14 voisine pousse également le lubrifiant dans le collecteur 18 par refoulement.

Du côté opposé du carter 4, en partie basse, les mêmes roues dentées intermédiaires 14 aspirent du lubrifiant et forcent sa circulation.

Vers le sommet du carter 4, le tuyau 16 aboutit dans une flasque formant un collecteur 19 de même structure que le collecteur 18. Ce collecteur 19 fonctionne en aspiration grâce aux roues dentées intermédiaires 14 supérieures qui forcent le lubrifiant à circuler dans le haut de l'appareil. Ces roues dentées intermédiaires 14 supérieures tournent dans des sens contraires à ceux des roues 14 inférieures et poussent ainsi le lubrifiant par refoulement vers le collecteur 19' et le tuyau 17 situés sur le côté opposé du carter 4.

La flèche 20 sur la figure 3 illustre le sens de circulation global du lubrifiant dans le carter 4.

Dans le cas ou la position de travail du carter 4 est inversé, le lubrifiant est envoyé vers le haut à travers le tuyau 17 et des collecteurs 18' et 19' associés à ce dernier.

Selon l'invention, les engrenages utiles pour la circulation du lubrifiant sont les deux roues dentées intermédiaires 14 placées près de chaque extrémité du carter 4 et disposées avant les entraînements dentés 15 terminaux qui portent un organe de coupe 5, le lubrifiant étant poussé du bas du carter 4 vers le haut dans la conduite prévue à cet effet, en l'occurrence le tuyau 16 avec le sens de rotation choisi sur la figure 3.

Il est également possible de rajouter des roues dentées supplémentaires placées par exemple aux deux extrémités du carter 4 pour assurer la circulation du lubrifiant dans ledit carter 4.

Selon un autre exemple de réalisation de l'invention les engrenages utiles pour la circulation du lubrifiant pourraient porter des ailettes de manière à former une pompe centrifuge et déplacer ledit lubrifiant dans le sens de rotation des engrenages considérés.

Plusieurs variantes de la tailleuse de haies sont envisageables, il peut notamment être prévu un nombre d'organes de coupe 5 plus ou moins important, de deux à six outils, éventuellement davantage, même si de manière optimale pour les travaux considérés il est préféré l'emploi de quatre organes de coupe 5 formés de plateaux 6 munis de couteaux 7, cela sans sortir du cadre de l'invention.

Les roues dentées intermédiaires 14 entre chaque entraînement denté 15 porteur d'un organe de coupe 5 peuvent être en nombre variable, lesquelles roues 14 peuvent être de dimensions plus ou moins grandes selon la longueur de la tailleuse de haies envisagée, sans sortir du cadre de l'invention, il est préférable cependant que les organes de coupe 5 tournent dans le même sens et donc que le nombre de roues dentées intermédiaires 14 soit impair.

Il est prévu avantageusement que les organes de coupe 5, notamment leurs couteaux 6, soient disposés dans un même plan, il est cependant envisageable, sans sortir du cadre de l'invention, de décaler les plateaux 6 pour former un espace limité entre les plans de coupe.

Au sens de l'invention seules les roues dentées intermédiaires 14 situées près des extrémités du carter 4 sont configurées pour faire circuler le lubrifiant dans ledit carter 4, il est toutefois envisageable de configurer d'autres roues dentées 14 pour faire circuler le lubrifiant sans sortir du cadre de l'invention, lequel lubrifiant peut être de l'huile ou tout fluide capable de protéger les engrenages pendant le travail de la tailleuse de haies.

Le carter 4 étanche peut être par ailleurs avantageusement pourvu d'orifices permettant d'effectuer la vidange et le remplacement du lubrifiant.

Les engrenages peuvent tourner dans les deux sens possibles et il peut donc être prévu d'inverser le sens de rotation du moteur et des organes de coupe sans sortir du cadre de l'invention.

La tailleuse de haies précédemment décrite comporte une protection 10 contre les chocs avec le sol en partie basse, il peut être envisagé dans le cadre de l'invention une protection à l'autre extrémité du carter 4 lorsque la tailleuse travaille pivotée à 180° par rapport à la position de la figure 2, et il peut être prévu de munir le carter 4 porteur des outils de coupe 5, ou/et le moteur 9, d'un capot de protection et de divers moyens de sécurité permettant de protéger aussi bien le matériel que les personnes employant la machine.

## Revendications

1. Tailleuse de haies (1) comportant un carter (4) portant des organes de coupe (5) animés en rotation au moyen d'un moteur (9) d'entraînement transmettant son mouvement par l'intermédiaire d'une transmission à engrenages placés dans le carter (4), ***caractérisée en ce que*** la transmission comporte un système interne (13) de lubrification qui est actionné par un train d'engrenages (12) constitué par des roues dentées intermédiaires (14), des entraînements dentés (15) porteurs des organes de coupe (5) et par l'arbre denté du moteur (9), placés dans le carter (4) et déplaçant du lubrifiant à l'intérieur entre le bas et le haut du carter (4) lorsque celui-ci est placé en position verticale durant le travail, qu'une roue dentée intermédiaire (14) pousse le lubrifiant par refoulement vers une flasque formant un collecteur (18) commun avec une roue dentée intermédiaire (14) voisine, et que le collecteur (18) est relié à un tuyau (16) de montée du lubrifiant vers le haut du carter (4).

2. Tailleuse de haies (1) selon la revendication 1, ***caractérisée en ce que*** les organes de coupe (5) sont portés par les entraînements dentés (15) dont certains sont intégrés dans le train d'engrenages (12) et d'autres placés aux extrémités de celui-ci.

3. Tailleuse de haies (1) selon la revendication 2, ***caractérisée en ce que*** les organes de coupe (5) sont synchronisés en rotation dans un même plan.

4. Tailleuse de haies (1) selon la revendication 2, ***caractérisée en ce que*** l'arbre moteur de l'entraînement est placé au centre du train d'engrenages (12).

5. Tailleuse de haies (1) selon la revendication 4, ***caractérisée en ce que*** trois roues dentées intermédiaires (14) sont placées entre chaque entraînement denté (15) porteur d'un organe de coupe (5) de manière à ce que lesdits organes de coupe (5) tournent tous dans le même sens.

6. Tailleuse de haies (1) selon la revendication 1, ***caractérisée en ce que*** le système (13) de lubrification implique quatre roues dentées intermédiaires (14) et au moins un tuyau (16, 17) pour le déplacement du lubrifiant entre le bas et le haut du carter (4) lorsque celui-ci est placé en position verticale.

7. Tailleuse de haies (1) selon la revendication 6, ***caractérisée en ce que*** les tuyaux (16 et 17) communiquent avec des flasques formant des collecteurs (18, 19, 18' et 19').

8. Tailleuse de haies (1) selon la revendication 6, ***caractérisée en ce que*** les engrenages (12) utiles pour la circulation du lubrifiant sont les deux roues dentées intermédiaires (14) placées à chaque extrémité du carter (4) et qui sont disposées avant les entraînements dentés (15) terminaux, le lubrifiant étant poussé du bas du carter (4) vers le haut dans le tuyau (16 ou 17).

9. Tailleuse de haies (1) selon la revendication 6, ***caractérisée en ce que*** les roues dentées intermédiaires (14) utiles pour la circulation du lubrifiant peuvent être munies d'ailettes de manière à former une pompe centrifuge et déplacer ledit lubrifiant dans le sens de rotation des engrenages considérés.

10. Tailleuse de haies (1) selon l'une quelconque des revendications précédentes, ***caractérisée en ce qu'**elle* comporte au moins une butée de protection (10) placée en partie basse du carter (4), lorsque le carter (4) est placé en position de travail à la verticale.

## Patentansprüche

1. Heckenschere (1) mit einem Gehäuse (4), das Schneidelemente (5) trägt, die mittels eines Antriebsmotors (9) in Drehung versetzt werden, der seine Bewegung mittels eines Getriebes, das im Gehäuse (4) angeordnet ist, überträgt, ***dadurch gekennzeichnet,* dass** das Getriebe ein inneres Schmiersystem (13) umfasst, das von einem Getriebezug (12) angetrieben wird, der von Zwischenzahnrädern (14), Zahnantrieben (15), die die Schneidelemente (5) tragen, und von der Zahnwelle des Motors (9) gebildet ist, die in dem Gehäuse (4) angeordnet sind und Schmiermittel im Inneren zwischen dem unteren und dem oberen Bereich des Gehäuses (4) bewegen, wenn dieses letztgenannte während der Arbeit in vertikaler Stellung angeordnet ist, dass ein Zwischenzahnrad (14) das Schmiermittel zu einem kleinen flachen Behälter zurückschiebt, der einen gemeinsamen Kollektor (18) mit einem benachbarten Zwischenzahnrad (14) bildet, und dass der Kollektor (18) mit einem Aufstiegsrohr (16) für das Schmiermittel zum oberen Bereich des Gehäuses (4) verbunden ist.

2. Heckenschere (1) nach Anspruch 1, ***dadurch gekennzeichnet,* dass** die Schneidelemente (5) von den Zahnantrieben (15) getragen werden, von denen manche in den Getriebezug (12) integriert und andere an den Enden desselben angeordnet sind.

3. Heckenschere (1) nach Anspruch 2, ***dadurch gekennzeichnet,* dass** die Schneidelemente (5) in Drehung in einer selben Ebene synchronisiert sind.

4. Heckenschere (1) nach Anspruch 2, ***dadurch gekennzeichnet,* dass** die Antriebswelle des Antriebs in der Mitte des Getriebezuges (12) angeordnet ist.

5. Heckenschere (1) nach Anspruch 4, ***dadurch gekennzeichnet,* dass** drei Zwischenzahnräder (14) zwischen jedem Zahnantrieb (15), der ein Schneidelement (5) trägt, angeordnet sind, so dass sich die Schneidelemente (5) in dieselbe Richtung drehen.

6. Heckenschere (1) nach Anspruch 1, ***dadurch gekennzeichnet,* dass** das Schmiersystem (13) vier Zwischenzahnräder (14) und mindestens ein Rohr (16, 17) für die Zirkulation des Schmiermittels zwischen dem unteren und dem oberen Bereich des Gehäuses (4), wenn dieses in vertikaler Stellung angeordnet ist, einsetzt.

7. Heckenschere (1) nach Anspruch 6, ***dadurch gekennzeichnet,* dass** die Rohre (16 und 17) mit kleinen flachen Behälter in Verbindung stehen, die Kollektoren (18, 19, 18' und 19') bilden.

8. Heckenschere (1) nach Anspruch 6, ***dadurch gekennzeichnet,* dass** die Getriebe (12), die für die Zirkulation des Schmiermittels nützlich sind, die beiden Zwischenzahnräder (14) sind, die an jedem Ende des Gehäuses (4) und vor den Endzahnantrieben (15) angeordnet sind, wobei das Schmiermittel vom unteren Bereich des Gehäuses (4) im Rohr (16 oder 17) nach oben befördert wird.

9. Heckenschere (1) nach Anspruch 6, ***dadurch gekennzeichnet,* dass** die Zwischenzahnräder (14), die für die Zirkulation des Schmiermittels nützlich sind, mit Flügeln ausgestattet sein können, um eine Zentrifugalpumpe zu bilden und das Schmiermittel in Drehrichtung der betreffenden Getriebe zu bewegen.

10. Heckenschere (1) nach irgend einem der vorhergehenden Ansprüche, ***dadurch gekennzeichnet,* dass** er mindestens einen Schutzanschlag (10) umfasst, der im unteren Teil des Gehäuses (4) angeordnet ist, wenn das Gehäuse (4) in einer vertikalen Arbeitsstellung angeordnet ist.

## Claims

1. Hedge trimmer (1) comprising a casing (4) carrying cutting elements (5) driven in rotation by means of a driving motor (9) transmitting its movement through a gear transmission placed in the casing (4), ***characterized in* that** the transmission comprises an internal lubricating system (13) which is actuated by a gear train (12) constituted by intermediate toothed wheels (14), toothed drive elements (15) carrying the cutting elements (5) and by the toothed shaft of the motor (9), placed in the casing (4) and moving lubricant in the interior between the bottom and the top of the casing (4) when the latter is placed in vertical position during work, that an intermediate toothed wheel (14) pushes the lubricant by back-flow towards a flask forming a collector (18) shared with an adjacent intermediate toothed wheel (14), and that the collector (18) is connected to a rising pipe (16) for the lubricant towards the top of the casing (4).

2. Hedge trimmer (1) according to Claim 1, ***characterized in* that** the cutting elements (5) are carried by the toothed drive elements (15), some of which are integrated in the gear train (12) and others of which are placed at the ends thereof.

3. Hedge trimmer (1) according to Claim 2, ***characterized in* that** the cutting elements (5) are synchronised in rotation in a same plane.

4. Hedge trimmer (1) according to Claim 2, ***characterized in* that** the drive shaft of the drive train is placed in the centre of the gear train (12).

5. Hedge trimmer (1) according to Claim 4, ***characterized in* that** three intermediate toothed wheels (14) are placed between each toothed drive element (15) carrying a cutting element (5) such that the said cutting elements (5) all turn in the same direction.

6. Hedge trimmer (1) according to Claim 1, ***characterized in* that** the lubrication system (13) involves four intermediate toothed wheels (14) and at least one pipe (16, 17) for the displacement of the lubricant between the bottom and the top of the casing (4) when the latter is placed in vertical position.

7. Hedge trimmer (1) according to Claim 6, ***characterized in* that** the pipes (16 and 17) communicate with flasks forming collectors (18, 19, 18' and 19').

8. Hedge trimmer (1) according to Claim 6, ***characterized in* that** the gear wheels (12) useful for the circulation of the lubricant are the two intermediate toothed wheels (14) placed at each end of the casing (4) and which are disposed before the terminal toothed drive elements (15), the lubricant being pushed from the bottom of the casing (4) towards the top in the pipe (16 or 17).

9. Hedge trimmer (1) according to Claim 6, ***characterized in* that** the intermediate toothed wheels (14) useful for the circulation of the lubricant can be provided with small blades so as to form a centrifugal pump and to displace the said lubricant in the direction of rotation of the gears concerned.

10. Hedge trimmer (1) according to any one of the preceding claims, ***characterized in* that** it comprises at least one protection stop (10) placed in the lower part of the casing (4), when the casing (4) is placed in a vertical work position.
